# EUROPÄISCHE PATENTANMELDUNG

(11) **EP 1 174 558 A1**
(43) Veröffentlichungstag der Anmeldung: **23.01.2002**
(21) Anmeldenummer: 01111802.3
(22) Anmeldetag: 16.05.2001
(51) Int. Cl.: E04C 1/41

(54) **Wärmedämmender Blockstein aus Rahmen und Mörtelfüllung**

(30) Priorität: 18.07.2000 DE 10041747
(71) Anmelder: Liapor GmbH & Co. KG, 91352 Hallerndorf (DE)
(72) Erfinder: Hennek, Paul, 91301 Forchheim (DE); Thienel, Karl-Christian, 91301 Forchheim (DE)
(74) Vertreter: Böhme, Volker, Dipl.-Ing.

(57) **Zusammenfassung**

Es gibt einen Blockstein aus einem Rahmen 4 und einer Mörtelfüllung 6, bei dem die Mörtelfüllung 6 Festkorn-Blähpartikel aufweist und bei dem dem Blockstein eine maximale Gesamtsbelastungsfähigkeit, dem Rahmen 4 eine maximale Rahmenbelastungsfähigkeit und der Mörtelfüllung 6 eine maximale Füllungbelastungsfähigkeit zugeordnet ist. Dabei ist es erwünscht, wenn der erhöhende Einfluß des Rahmens auf die Wärmeleitfähigkeit des Blocksteins vermindert ist. Dies ist erreicht, indem die maximale Füllungbelastungsfähigkeit auf mindestens 5 % und bis zu 45 % der Gesamtbelastungsfähigkeit heraufgesetzt ist, indem als Festkorn-Blähpartikel Blähglas-Partikel in verdichteter Packung vorgesehen sind, wobei die Mörtelfüllung frei von Kugelporen gehalten ist. Bei dem Blockstein stellt die Mörtelfüllung eine integrierte Wärmedämmung dar, die ausreichend fest ist, um selbst einen nicht unwesentlichen Teil der mechanischen Belastung abzutragen.

## Beschreibung

Die Erfindung betrifft einen wärmedämmenden Blockstein aus einem Rahmen und einer Mörtelfüllung, bei dem der Rahmen eine Kammerhöhlung begrenzt, welche die Mörtelfüllung aufnimmt, bei dem die Mörtelfüllung hydraulisches Bindemittel, mineralische harte Festkorn-Blähpartikel, die dicht an dicht liegen, und Zwickelporen aufweist und über das hydraulische Bindemittel mit dem Rahmen kraftschlüssig verbunden ist und bei dem dem Blockstein eine maximale Gesamtbelastungsfähigkeit, dem Rahmen eine maximale Rahmenbelastungsfähigkeit und der Mörtelfüllung eine maximale Füllungbelastungsfähigkeit zugeordnet ist.

Bei einem bekannten (EP 0 049 348 A1) Blockstein bzw. Mauerstein dieser Art sind als Festkorn-Blähpartikel Blähton-Partikel in offener Packung vorgesehen und ist Luftporenbildner derart vorgesehen, daß außer den Zwickelporen auch noch Kugelporen vorhanden sind, welche die Offenheit der Packung bedingen. Bei diesem bekannten Blockstein ist die Füllungbelastungsfähigkeit vernachlässigbar gering und macht nicht mehr als 1 % der Gesamtbelastungsfähigkeit aus. Die Tatsache, daß der Rahmen die Gesamtbelastungsfähigkeit im wesentlichen alleine zu erbringen hat, wirkt sich auf die Dimensionierung und/oder das Material des Rahmens aus. Dieser bekannte Blockstein hat insgesamt eine Wärmeleitfähigkeit λ > 0,14 W/(mK), wobei dem Rahmen eine Wärmeleitfähigkeit λ > 0,17 und der Mörtelfüllung eine Wärmeleitfähigkeit von ca. λ = 0,05 zuzuordnen ist. Um eine verbesserte Wärmedämmung bei Bauten zu erreichen, wird heute auch von einem Blockstein der eingangs genannten Art eine Wärmeleitfähigkeit λ < 0,13 W/(mK) gefordert, was aber durch ein weiteres Reduzieren der Wärmeleitfähigkeit der Mörtelfüllung nicht zu erreichen ist.

Eine Aufgabe der Erfindung ist es daher, einen Blockstein der eingangs genannten Art zu schaffen, bei dem der erhöhende Einfluß des Rahmens auf die Wärmeleitfähigkeit des Blocksteins vermindert ist. Der erfindungsgemäße Blockstein ist, diese Aufgabe lösend, dadurch gekennzeichnet, daß die maximale Füllungbelastungsfähigkeit auf mindestens 5 % und bis zu 45 % der Gesamtbelastungsfähigkeit heraufgesetzt ist, indem als Festkorn-Blähpartikel Blähglas-Partikel in verdichteter Packung vorgesehen sind, wobei die Mörtelfüllung frei von Kugelporen gehalten ist.

Bei dem erfindungsgemäßen Blockstein bzw. Mauerstein stellt die Mörtelfüllung eine integrierte Wärmedämmung dar, die ausreichend fest ist, um selbst einen nicht unwesentlichen Teil der mechanischen Belastung abzutragen. Die Rahmenbelastungsfähigkeit macht nur 55 - 95 % der Gesamtbelastungsfähigkeit des Blocksteins aus. Aufgrund ihrer verbesserten Festigkeit wirkt die Mörtelfüllung auch vermehrt aussteifend für den Rahmen. Die Mörtelfüllung erhöht dadurch die Tragfähigkeit des Rahmens und läßt es zu, dessen Dimensionierung zu reduzieren und/oder dessen Materialzusammensetzung hinsichtlich verminderter Wärmeleitfähigkeit zu verändern. Dadurch wird die Wärmeleitfähigkeit des Rahmens und damit des Blocksteins reduziert. Es liegt ein Blockstein mit einer Wärmeleitfähigkeit λ < 0,13 W/(mK) vor.

Bei dem erfindungsgemäßen Blockstein weisen die Blähglas-Partikel eine erhöhte Kornfestigkeit von > 10 kN auf. Die Rohdichte der Mörtelfüllung liegt weit über 100 g/l, beträgt mindestens 250 g/l und liegt z. B. bei 300 g/l. Die Kammerhöhlung geht von einer Außenseite des Blocksteins zu einer gegenüberliegenden Außenseite durch, ist also beiderends offen. Beim erfindungsgemäßen Blockstein liegt die Wärmeleitfähigkeit der Mörtelfüllung bei ca. λ = 0,08 W/(mK). Das hydraulische Bindemittel ist in der Regel ein Zement oder ein zementähnliches Material. Die Mörtelfüllung wird erzeugt, indem angemachter Mörtel in die Kammerhöhlung gegeben wird und in der Kammerhöhlung des Rahmens aushärtet.

Eine wesentliche Eigenschaft des erfindungsgemäßen Blocksteins liegt im Schwind- bzw. Schrumpfverhalten der Mörtelfüllung. Wenn der Blockstein die geforderte Gesamtbelastungsfähigkeit auf Dauer aufweisen soll, muß die kraftschlüssige Verbindung zwischen der Mörtelfüllung und dem Rahmen dauerhaft sein. Dies ist nur der Fall, wenn die Schwindung der Mörtelfüllung vergleichbar der des Rahmens ist. Die hierzu erforderliche geringe Schwindung der Mörtelfüllung ist bei dem erfindungsgemäßen Blockstein aufgrund der Blähglas-Partikel und deren verdichteter Packung gegeben. Die kraftschlüssige Verbindung ist in der Regel vollflächig vorhanden.

Der Rahmen besteht stets aus einem steinigen, mineralischen Material, das gegenüber dem Bekannten (EP 0 049 348 A1) bei gleicher Gesamttragfähigkeit eine verringerte Wärmeleitfähigkeit und eine geringere Belastungsfähigkeit aufweist. Besonders zweckmäßig und vorteilhaft ist es daher, wenn der Rahmen aus einem Leichtbeton oder einem leichten Kalksandstein, jeweils der Trockenrohdichte 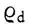 ≤ 1,4 kg/dm³ besteht. Diese Materialien erfüllen, im Unterschied zu z. B. porosiertem Ziegel, die Forderungen hinsichtlich Wärmeleitfähigkeit, Belastungsfähigkeit und kraftschlüssiger Verbindung mit der Mörtelfüllung verbessert.

Besonders zweckmäßig und vorteilhaft ist es dabei, wenn der Rahmen aus einem haufwerksporigen Leichtbeton der Trockenrohdichte 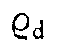 ≤ 0,8 kg/dm³ besteht oder wenn der Rahmen aus einem leichten Kalksandstein der Trockenrohdichte 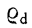 ≤ 1,2 kg/dm³ besteht. Diese Rahmen weisen verringerte Wärmeleitfähigkeit auf, was mit einer Verringerung der Belastungsfähigkeit verbunden ist.

Die erfindungsgemäße Gestaltung des Blocksteins hat unabhängig vom Material des Rahmens Einfluß auf die Querschnittsverteilung von Rahmen und Mörtelfüllung und zwar dahingehend, daß gegenüber dem bekannten Blockstein (EP 0 048 348) der Anteil des Rahmenquerschnitts am Blockstein-Gesamtquerschnitt verringert und der Anteil des Mörtelfüllungsquerschnitts am Blockstein-Gesamtquerschnitt vergrößert ist. In der Regel ist es so, daß der Anteil des Mörtelfüllungsquerschnitts am Blockstein-Gesamtquerschnitt auf mindestens 15 % erhöht ist. Dies entspricht der gewünschten verringerten Belastungsfähigkeit und gewünschten verringerten Wärmeleitfähigkeit des Rahmens. Der Anteil des Mörtelfüllungsquerschnitts am Blockstein-Gesamtquerschnitt liegt in der Regel zwischen 15 % und 75 %, vorzugsweise zwischen 40 % und 65 %.

Besonders zweckmäßig und vorteilhaft ist es dabei, wenn der Anteil des Rahmenquerschnitts am Blockstein-Gesamtquerschnitt bei aus haufwerksporigem Leichtbeton bestehendem Rahmen maximal 85 %, insbesondere maximal 75 % ausmacht. Besonders zweckmäßig und vorteilhaft ist es dabei aber auch, wenn der Anteil des Rahmenquerschnitts am Blockstein-Gesamtquerschnitt bei aus leichtem Kalksandstein bestehendem Rahmen maximal 85 % ausmacht, insbesondere maximal 75 % ausmacht. Diese Werte geben beispielhaft Gestaltungen an, die sich bei der Verwirklichung des erfindungsgemäßen Blocksteins ergeben.

Der bekannte (EP 0 049 348 A1) Blockstein weist eine Kammerhöhlung auf, die durch Querwände in relativ viele, z. B. sieben, Kammern unterteilt ist. Dies trägt zur Erhöhung der Wärmeleitfähigkeit des diese Querwände bildenden Rahmens bei. Besonders zweckmäßig und vorteilhaft ist es daher, wenn die Kammerhöhlung durch Querwand in maximal vier Kammern unterteilt ist. Die verringerte Anzahl an Kammern und die verringerte Anzahl der Querwände lassen sich wegen der verringerten erforderlichen Rahmenbelastungsfähigkeit vorsehen.

Hinsichtlich der Füllungbelastungsfähigkeit ist es besonders zweckmäßig und vorteilhaft, wenn die maximale Füllungbelastungsfähigkeit auf mindestens 10 % und bis zu 40 % der Gesamtbelastungsfähigkeit heraufgesetzt ist. Je mehr man die Belastungsfähigkeit der Mörtelfüllung heraufsetzt bzw. anhebt, desto größer wird der Anteil des Rahmens an der Wärmedämmung des Blocksteins. Das hier zur Rede stehende Blähglas ist an sich bekannt (EP 0 661 240 B1). Es ist auch an sich bekannt, zu einem Mörtel ein Hilfsmittel zu geben, das einerseits eine Schäumung für Zwickelporen bewirkt und andererseits eine verdichtete, von Kugelporen freie Packung ergibt.

Der erfindungsgemäße Blockstein verringerter Wärmeleitfähigkeit hat in der Regel eine Wärmeleitfähigkeit deutlich unter λ = 0,13, z. B. eine Wärmeleitfähigkeit λ < 0,11 W/(mK). Trotz der erhöhten Füllungbelastbarkeit liegt die Druckfestigkeit der Mörtelfüllung unter 2 MPa. Wegen der verringerten Wärmeleitfähigkeit läßt es der Blockstein zu, Wände geringerer Dicke zu erstellen, wobei eine zusätzliche Wärmedämmschicht der Wand entfällt.

Die Herstellung des erfindungsgemäßen Blocksteins erfolgt z. B. in Form von fertigen Einzelsteinen werkseitig. Es ist auch möglich, aus solchen fertigen Einzelsteinen werkseitig Wandelemente zu fertigen. Bei einer anderen Vorgehensweise werden werkseitig vorab nur einzelne Rahmen gefertigt, die zu einem Wandsystem zusammengebaut werden, bei dem dann werkseitig oder bauseitig nachträglich die Mörtelfüllungen eingebracht werden, um ein Wandelement aus den fertigen Blocksteinen zu erhalten. Die Erfindung umfaßt auch Blocksteine, die derart hergestellt eingebaut im Wandelement vorliegen.

In der Zeichnung sind bevorzugte Ausführungsformen der Erfindung dargestellt und zeigt
- Fig. 1: eine Draufsicht auf einen wärmedämmenden Blockstein aus Rahmen und Mörtelfüllung,
- Fig. 2: eine Seitenansicht mit Aufbruch des Blocksteins gemäß Fig. 1 und
- Fig. 3: eine Draufsicht auf einen zweiten wärmedämmenden Blockstein aus Rahmen und Mörtelfüllung.

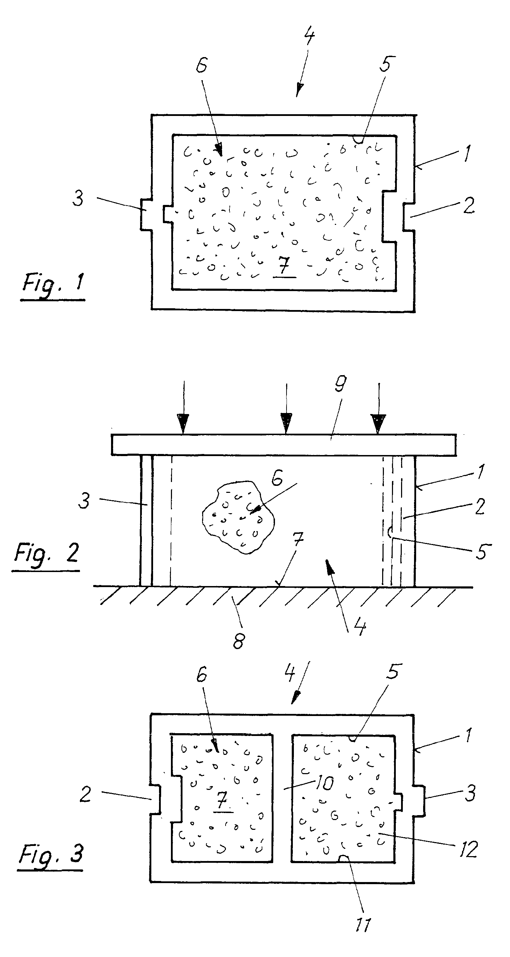

Der Blockstein gemäß Fig. 1 und 2 ist im wesentlichen ein Quader und besitzt folgende Außenabmessungen: Länge 495 mm, Breite 365 mm und Höhe 245 mm. Er weist an zwei einander gegenüberliegenden Stirnseiten 1 eine Nut 2 bzw. eine Feder 3 auf. Der Blockstein besitzt einen einfach nur umlaufenden, d. h. von Querwand freien Rahmen 4, der eine als einzige Kammer gestaltete Kammerhöhlung 5 begrenzt, die eine einstückige Mörtelfüllung 6 aufnimmt. Der Blockstein bildet zwei einander gegenüberliegende Außenseiten 7, von denen sich eine oben und die andere unten befindet. Diese beiden Außenseiten 7 sind jeweils von dem Rahmen 4 und der Mörtelfüllung 6 gebildet, die beide eine ebene Fläche bilden, d. h. an der Außenseite fluchten. Der Blockstein ist in der Regel an den beiden Außenseiten plan geschliffen.

Die verschiedenen maximalen Belastungsfähigkeiten des Blocksteins werden gemäß Fig. 2 ermittelt, indem der Blockstein mit der unteren Außenseite 7 auf eine Unterlage 8 gestellt wird und an der oberen Außenseite über eine Druckplatte 9 gemäß Pfeilen mit einer Kraft belastet wird, wobei die Belastung in kN angegeben wird. Die maximale Gesamtbelastungsfähigkeit des Blocksteins liegt bei derjenigen Belastung vor, bei der der Blockstein erste Anzeichen des Zerbrechen zeigt. Die maximale Belastungsfähigkeit des Rahmens liegt bei derjenigen Belastung des ohne Mörtelfüllung gemessenen Rahmens vor, bei welcher der Rahmen erste Anzeichen des Zerbrechens zeigt. Die maximale Belastungsfähigkeit der Mörtelfüllung wird aus der Differenz der maximalen Gesamtbelastungsfähigkeit und der maximalen Rahmenbelastungsfähigkeit ermittelt. Die Wärmeleitfähigkeit des Blocksteins beträgt λ = 0,11.

Die ausgehärtete Mörtelfüllung des Blocksteins weist folgende Zusammensetzung in Masse-% auf: Zement 19,5, Blähglas 60, Hilfsmittel 1 0,3, Hilfsmittel 2 0,2. Das Blähglas weist folgende Körnung auf: 2/4 . Die Rohdichte der ausgehärteten Mörtelfüllung beträgt 300 g/l. Die Wärmeleitfähigkeit ist λ = 0,08. Der Rahmen besteht aus Leichtbeton folgender Zusammensetzung in Masse-%: Zement 30, Blähton 59,5, Schaumbildner 0,3, Stabilisierer 0,2. Die Trokkenrohdichte ist 0,7. Die Wärmeleitfähigkeit ist λ = 0,17.

Der Blockstein gemäß Fig. 3 ist so wie der Blockstein gemäß Fig. 1 gestaltet, soweit nachfolgend nicht etwas anderes angegeben ist. So weist der Blockstein gemäß Fig. 3 folgende Außenabmessungen auf: Länge 495 mm, Breite 365 mm und Höhe 248 mm. Der Rahmen 4 bildet der Breite nach mittig eine Querwand 10, so daß die Kammerhöhlung 5 in zwei Kammern 11 unterteilt ist und die Mörtelfüllung 6 in zwei Kammerinhalte 12 unterteilt ist.

Die ausgehärtete Mörtelfüllung des Blocksteins weist folgende Zusammensetzung in Masse-% auf: Zement 39,5, Blähglas 60, Schaumbildner 0,3, Stabilisierer 0,2. Das Blähglas weist folgende Körnung auf: 2/4. Die Rohdichte der ausgehärteten Mörtelfüllung beträgt 300 g/l. Die Wärmeleitfähigkeit ist λ = 0,08. Der Rahmen besteht aus leichtem Kalksandstein folgender Zusammensetzung in Masse%: Kalk 17, Blähton 82,5, Schaumbildner 0,3, Stabilisierer 0,2. Die Trockenrohdichte ist 1,2. Die Wärmeleitfähigkeit ist λ = 0,30.

## Patentansprüche

1. Wärmedämmender Blockstein aus einem Rahmen und einer Mörtelfüllung,
bei dem der Rahmen eine Kammerhöhlung begrenzt, welche die Mörtelfüllung aufnimmt,
bei dem die Mörtelfüllung hydraulisches Bindemittel, mineralische harte Festkorn-Blähpartikel, die dicht an dicht liegen, und
Zwickelporen aufweist und über das hydraulische Bindemittel mit dem Rahmen kraftschlüssig verbunden ist, und
bei dem dem Blockstein eine maximale Gesamtbelastungsfähigkeit, dem Rahmen eine maximale Rahmenbelastungsfähigkeit und der Mörtelfüllung eine maximale Füllungbelastungsfähigkeit zugeordnet ist,
**dadurch gekennzeichnet,**
**daß** die maximale Füllungbelastungsfähigkeit auf mindestens 5 % und bis zu 45 % der Gesamtbelastungsfähigkeit heraufgesetzt ist,
indem als Festkorn-Blähpartikel Blähglas-Partikel in verdichteter Packung vorgesehen sind,
wobei die Mörtelfüllung frei von Kugelporen gehalten ist.

2. Blockstein nach Anspruch 1, **dadurch gekennzeichnet, daß** die Rohdichte der Mörtelfüllung (6) mindestens 250 g/l beträgt.

3. Blockstein nach Anspruch 1 oder 2, **dadurch gekennzeichnet, daß** der Rahmen (4) aus einem Leichtbeton oder einem leichten Kalksandstein, jeweils der Trockenrohdichte 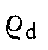 ≤ 1,4 kg/dm³ besteht.

4. Blockstein nach Anspruch 3, **dadurch gekennzeichnet, daß** der Rahmen (4) aus einem haufwerksporigen Leichtbeton der Trokkenrohdichte 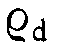 ≤ 0,8 kg/dm³ besteht.

5. Blockstein nach Anspruch 3, **dadurch gekennzeichnet, daß** der Rahmen (4) aus einem leichten Kalksandstein der Trockenrohdichte 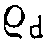 ≤ 1,2 kg/dm³ besteht.

6. Blockstein nach einem der vorhergehenden Ansprüche, **dadurch gekennzeichnet, daß** der Anteil des Mörtelfüllungquerschnitts am Blockstein-Gesamtquerschnitt auf mindestens 15 % erhöht ist.

7. Blockstein nach Anspruch 6, **dadurch gekennzeichnet, daß** der Anteil des Rahmenquerschnitts am Blockstein-Gesamtquerschnitt bei aus haufwerksporigem Leichtbeton bestehendem Rahmen (4) maximal 85 % ausmacht.

8. Blockstein nach Anspruch 7, **dadurch gekennzeichnet, daß** der Anteil des Rahmenquerschnitts am Blockstein-Gesamtquerschnitt bei aus haufwerksporigem Leichtbeton bestehendem Rahmen (4) maximal 75 % ausmacht.

9. Blockstein nach Anspruch 6, **dadurch gekennzeichnet, daß** der Anteil des Rahmenquerschnitts am Blockstein-Gesamtquerschnitt bei aus leichtem Kalksandstein bestehendem Rahmen (4) maximal 85 % ausmacht.

10. Blockstein nach Anspruch 9, **dadurch gekennzeichnet, daß** der Anteil des Rahmenquerschnitts am Blockstein-Gesamtquerschnitt bei aus leichtem Kalksandstein bestehendem Rahmen (4) maximal 75 % ausmacht.

11. Blockstein nach einem der vorhergehenden Ansprüche, **dadurch gekennzeichnet, daß** die Kammerhöhlung (5) durch Querwand (10) in maximal vier Kammern (11) unterteilt ist.

12. Blockstein nach einem der vorhergehenden Ansprüche, **dadurch gekennzeichnet, daß** die maximale Füllungbelastungsfähigkeit auf mindestens 10 % und bis zu 40 % der Gesamtbelastungsfähigkeit heraufgesetzt ist.
